# EUROPEAN PATENT SPECIFICATION

(11) **EP 1 740 501 B1**
(45) Date of publication and mention of the grant of the patent: **21.12.2016**
(21) Application number: 05722308.3
(22) Date of filing: 05.04.2005
(51) Int. Cl.: C01B 33/143, D21H 17/68

(54) **SILICA-BASED SOLS AND THEIR PRODUCTION AND USE**
KIESELSOLE, VERFAHREN ZUR HERSTELLUNG VON KIESELSOLEN, SOWIE VERWENDUNG DERGLEICHEN
SOLS DE SILICE, PROCÉDÉ DE PRÉPARATION DE CES SOLS AINSI QUE LEUR UTILISATION.

(30) Priority: 16.04.2004 EP 04445049; 07.04.2004 US 559958 P; 07.04.2004 US 559965 P; 16.04.2004 EP 04445048
(43) Date of publication of application: 10.01.2007
(73) Proprietor: Akzo Nobel N.V., 6800 SB Arnhem (NL); Akzo Nobel Pulp and Performance Chemicals AB, 445 80 Bohus (SE)
(72) Inventor: MANKIN, Glenn, MARTINEZ, Georgia 30907 (US); TOKARZ, Marek, S-442 39 KUNGÄLV (SE); HANSSON, Freddie, S-442 33 KUNGÄLV (SE)
(74) Representative: Akzo Nobel IP Department
(86) International application number: PCT/SE2005/000489
(87) International publication number: WO 2005/100241

(56) References cited:
- EP-A- 0 491 879
- EP-A- 0 502 089
- EP-A- 0 572 888
- US-A- 5 603 805

## Description

### Field of the Invention

The present invention generally relates to aqueous silica-based sols suitable for use in papermaking. More particularly, the invention relates to silica-based sols, their production and use in papermaking. The present invention provides an improved method of producing silica-based sols with high stability and SiO₂ contents as well as improved drainage performance.

### Background of the Invention

In the papermaking art, an aqueous suspension containing cellulosic fibres and optional fillers and additives, referred to as stock, is fed into a headbox which ejects the stock onto a forming wire. Water is drained from the stock so that a wet web of paper is formed on the wire, and the web is further dewatered and dried in the drying section of the paper machine. Drainage and retention aids are conventionally introduced into the stock in order to facilitate drainage and to increase adsorption of fine particles onto the cellulosic fibres so that they are retained with the fibres on the wire.

Sols of silica-based particles are widely used as drainage and retention aids in combination with charged organic polymers. Such additive systems are among the most efficient now in use in the papermaking industry. One of the parameters affecting the properties and performance of silica-based sols is the specific surface area; stable, high-performance silica-based sols usually contain particles with a specific surface area of at least 300 m²/g. Another parameter is the S value, which indicates the degree of aggregate or microgel formation; a lower S-value is indicative of a higher degree of aggregation. While high surface areas and a certain degree of aggregate or microgel formation may be advantageous from a performance point of view, very high surface areas and extensive particle aggregation or microgel formation result in considerably decreased stability of silica-based sols, thereby making extreme dilution of the sols necessary so as to avoid gel formation.

U.S. Patent No. 5,368,833 discloses a silica sol comprising silica particles having a specific surface area within the range of from 750 to 1,000 m²/g which are surface-modified with aluminium to a degree of from 2 to 25 % substitution of silicon atoms, and wherein the sol has an S value within the range of from 8 to 45 %. Said patent also discloses a process for producing the silica sol which comprises the steps of acidifying a water glass solution to a pH within the range of from 1 to 4; alkalising the acid sol at an SiO₂ content within the range of from 7 to 4.5 % by weight; allowing particle growth of the sol to a specific surface area within the range of from 750 to 1,000 m²/g; and subjecting the sol to aluminium modification.

U.S. Patent No. 5,603,805 discloses silica sols having an S value within the range of from 15 to 40 % comprising anionic silica particles, said silica particles optionally being aluminium modified, and having a specific surface area within the range of from 300 to 700 m²/g. Said patent also discloses a process for producing the silica sol comprising the steps of acidifying a water glass solution to a pH within the range of from 1 to 4; alkalising the acid sol at an SiO₂ content within the range of from 7 to 5 % by weight; alternatively alkalisation of the acid sol to a pH value between 7 and 9; and particle growth of the sol to a specific surface area within the range of from 300 to 700 m²/g; and optionally followed by aluminium modification.

International Patent Appln. Publ. No. WO 98/56715 discloses a process for preparing an aqueous polysilicate microgel which comprises mixing an aqueous solution of an alkali metal silicate with an aqueous phase of a silica-based material having a pH of 11 or less. The polysilicate microgel is used as a flocculating agent in combination with at least one cationic or amphoteric polymer in the production of pulp and paper and for water purification.

International Patent Appln. Publ. No. WO 00/66492 discloses a process for the production of an aqueous sol containing silica-based particles which comprises acidifying an aqueous silicate solution to a pH of from 1 to 4 to form an acid sol; alkalising the acid sol in a first alkalisation step; allowing particle growth of the alkalised sol for at least 10 minutes and/or heat-treating the alkalised sol at a temperature of at least 30°C; alkalising the obtained sol in a second alkalisation step; and optionally modifying the silica-based sol with, for example, aluminium.

U.S. Patent No. 6,372,806 discloses a process for preparing a stable colloidal silica having an S-value of from 20-50 and wherein said silica has a surface area of greater than 700 m²/g comprising: (a) charging a reaction vessel with a cationic ion exchange resin having at least 40 percent of its ion exchange capacity in the hydrogen form wherein said reaction vessel has means for separating said colloidal silica from said ion exchange resin; (b) charging said reaction vessel with an aqueous alkali metal silicate having a mole ratio of SiO₂ to alkali metal oxide in the range of from 15:1 to 1:1 and a pH of at least 10.0; (c) stirring the contents of said reaction vessel until the pH of said contents is in the range of from 8.5 to 11.0; (d) adjusting the pH of the contents of said reaction vessel to above 10.0 using an additional amount of said alkali metal silicate; and (e) separating the resulting colloidal silica from said ion exchange resin while removing said colloidal silica from said reaction vessel.

U.S. Patent No. 5,176,891 discloses a method for the production of water soluble polyaluminosilicate microgels having a surface area of at least about 1,000 m²/g, comprising the steps of (a) acidifying a dilute solution of alkali metal silicate containing about 0.1 to 6 wt. % SiO₂ to a pH of between 2 and 10.5 to produce polysilicic acid; followed by (b) reacting a water soluble aluminate with the polysilicic acid before the polysilicic acid has gelled such that a product with an alumina/silica mole ratio greater than about 1/100 is obtained; and then (c) diluting the reaction mix before gelation has occurred to the equivalence of about 2.0 wt. % SiO₂ or less to stabilize the microgels.

EP 0 572 888 A1 discloses a continuous process for the preparation of aqueous alkaline silica sols which contain non-aggregated, spherical SiO₂ particles with an average diameter of 27-72 nm.

It would be advantageous to be able to provide silica-based sols with high stability and SiO₂ contents as well as improved drainage performance. It would also be advantageous to be able to provide improved processes for the preparation of silica-based sols with stability and SiO₂ contents as well as improved drainage performance. It would also be advantageous to be able to provide a papermaking process with improved drainage.

### Summary of the Invention

The present invention is generally directed to a process for producing an aqueous silica-based sol having an S-value in the range of from 10 to 50 % which comprises:
(a) providing a cationic ion exchange resin having at least part of its ion exchange capacity in hydrogen form;
(b) bringing said ion exchange resin in contact with an aqueous alkali metal silicate solution to form an aqueous slurry;
(c) stirring said aqueous slurry until the pH of the aqueous phase is in the range of from 5.0 to 8.0 and to allow particle aggregation and mlcrogel formation;
(d) adjusting the pH of said aqueous phase to above 9.0 by adding at least one alkaline material selected from aqueous alkali metal silicates, aqueous alkali metal hydroxides and ammonium hydroxide; and
(e) separating said ion exchange resin from the aqueous phase after step (c) or after step (d).

### Detailed Description of the Invention

In accordance with the present invention there is provided silica-based sols which are suitable for use as flocculating agents in water purification and as drainage and retention aids in papermaking. The silica-based sols of the invention exhibit good stability over extended periods of time, notably high surface area stability and high stability to avoid complete gel formation. The silica-based sols further result in very good drainage and retention when used in papermaking, in particular improved drainage. Hereby the present invention makes it possible to increase the speed of the paper machine and to use a lower dosage of additive to give a corresponding drainage effect, thereby leading to an improved papermaking process and economic benefits. The silica-based sols of the invention can be prepared by a process that is simple, quick and easy to control and regulate, and the process makes it possible to utilize simple and less expensive production equipment. Hereby the silica-sols of the invention can be produced by a process that is simplified, improved and more economic,

The ion exchange resin used in the process is cationic and has at least part of its ion exchange capacity in the hydrogen form, i.e. an acid cationic ion exchange resin, preferably a weak acid cationic ion exchange resin. Suitably, the ion exchange resin has at least 40 % of its ion exchange capacity in the hydrogen form, preferably at least 50 %. Suitable ion exchange resins are provided on the market by several manufacturers, for example Amberlite® IRC84SP from Rohm & Haas. Preferably, a reaction vessel equipped with means for mixing, e.g. a stirrer, is charged with the ion exchange resin. Preferably, the ion exchange resin is regenerated by addition of an acid, e.g. sulphuric acid, preferably according to manufacturer's instruction.

Step (b) of the process comprises bringing together the cationic ion exchange resin with an aqueous alkali metal silicate, Suitably, this is achieved by adding the ion exchange resin and aqueous alkali metal silicate to the reaction vessel. Preferably, a reaction vessel containing regenerated ion exchange resin is charged with the aqueous alkali metal silicate whereby an aqueous slurry is formed. Usually, the aqueous alkali metal silicate is added to a reaction vessel containing ion exchange resin having at least part of its ion exchange capacity in hydrogen form at a rate in the range of from 0.5 to 50 g SiO₂ per minute and kg ion exchange resin, calculated as ion exchange resin having 100 % of its ion exchange capacity in hydrogen form, suitably from 1 to 35, and preferably from 2 to 20. Alternatively, a reaction vessel containing the aqueous alkali metal silicate is charged with the regenerated ion exchange resin whereby an aqueous slurry is formed.

Examples of suitable aqueous alkali metal silicates or water glass include conventional materials, e.g. lithium, sodium and potassium silicates, preferably sodium silicate. The molar ratio of silica to alkali metal oxide, e.g. SiO₂ to Na₂O₁ K₂O or Li₂O, or a mixture thereof, in the silicate solution can be in the range of from 15:1 to 1:1, suitably in the range of from 4.5:1 to 1.5:1, preferably from 3.9:1 to 2.5:1. The aqueous alkali metal silicate used can have an SiO₂ content of from about 2 to about 35 % by weight, suitably from about 5 to about 30 % by weight, and preferably from about 15 to about 25 % by weight. The pH of the aqueous alkali metal silicate is usually above 11, typically above 12.

Step (c) of the process comprises stirring the aqueous slurry formed in step (b) until the pH of the aqueous phase is in the range of from 5.0 to 8.0. Suitably stirring is carried out until the pH of the aqueous phase is In the range of from 6.0 to 8.0, preferably from 6.5 to 7.5. Preferably, particle growth takes place while stirring the aqueous slurry. The silica-based particles formed usually have a specific surface area of at least 300 m²/g, preferably at least 700 m²/g. The specific surface area is suitably up to 1,500 m²/g, preferably up to 1,000 m²/g. The slurry is stirred to allow particle aggregation and microgel formation, usually corresponding to an S value in the range of from 5 to 45 %, suitably from 8 to 35 %, preferably from 10 to 25 % and most preferably from 15 to 23 %. The stirring usually takes place during a period of time of from 5 to 240 minutes, preferably from 15 to 120 minutes.

Step (c) of the process can be carried out simultaneously with and/or after step (b). In a preferred embodiment, the aqueous alkali metal silicate is added under stirring to the reaction vessel containing ion exchange resin having at least part of its ion exchange capacity in hydrogen form and then, after completed addition, the stirring continues to achieve the pH and optionally particle aggregation or microgel formation as described above. In another preferred embodiment, the aqueous alkali metal silicates is added under stirring to the reaction vessel containing ion exchange resin having at least part of its ion exchange capacity in hydrogen form to achieve the pH and optionally particle aggregation or microgel formation as described above.

Step (d) of the process comprises adding to the aqueous phase one or more alkaline materials selected from aqueous alkali metal silicates, aqueous alkali metal hydroxides and ammonium hydroxide. Hereby the pH of the aqueous phase is adjusted to above 9.0, preferably raised to a pH above 10.0; suitably the pH is in the range of from 9.2 to 11.5, preferably from 9.5 to 11.2, and most preferably from 10.0 to 11.0. At least one alkaline material is added, either singly or in combination with at least one second material.

Examples of suitable alkaline materials include aqueous alkali metal silicates, e.g. any of those defined above, preferably sodium silicate; aqueous alkali metal hydroxides, e.g. sodium and potassium hydroxides, preferably sodium hydroxide; ammonium hydroxide.

Examples of suitable second materials include aluminium compounds and organic nitrogen-containing compounds. Examples of suitable aluminium compounds include neutral and essentially neutral aluminium salts, e.g, aluminium nitrate, alkaline aluminium salts, e.g. aluminates, suitably aqueous aluminates, e.g. sodium and potassium aluminates, preferably sodium aluminate.

Example of suitable organic nitrogen-containing compounds include primary amines, secondary amines, tertiary amines and quaternary amines, the latter also referred to as quaternary ammonium compounds. The nitrogen-containing compound is preferably water soluble or water-dispersible, The amine can be uncharged or cationic. Examples of cationic amines include acid addition salts of primary, secondary and tertiary amines and, preferably, quaternary ammonium compounds, as well as their hydroxides. The organic nitrogen-containing compound usually has a molecular weight below 1,000, suitably below 500 and preferably below 300. Preferably, a low molecular weight organic nitrogen-containing compound is used, for example those compounds having up to 25 carbon atoms, suitably up to 20 carbon atoms, preferably from 2 to 12 carbon atoms and most preferably from 2 to 8 carbon atoms. In a preferred embodiment, the organic nitrogen-containing compound has one or more oxygen-containing substituents, for example with oxygen in the form of hydroxyl groups and/or alkyloxy groups. Examples of preferred substituents of this type include hydroxy alkyl groups, e.g. ethanol groups, and methoxy and ethoxy groups. The organic nitrogen-containing compounds may include one or more nitrogen atoms, preferably one or two. Preferred amines include those having a pKa value of at least 6, suitably at least 7 and preferably at least 7.5.

Examples of suitable primary amines, i.e. amines having one organic substituent, include alkyl amines, e.g. propyl amine, butyl amine and cyclohexyl amine; alkanol amines, e.g. ethanol amine; and alkoxyalkyl amines, e.g. 2-methoxyethyl amine. Examples of suitable secondary amines, i.e. amines having two organic substituents, include dialkyl amines, e.g. diethyl amine, dipropyl amine and di-isopropyl amine; dialkanol amines, e.g. diethanol amine, and pyrrolidine. Examples of suitable tertiary amines, i.e. amines having three organic substituents, include trialkyl amines, e.g. triethyl amine; trialkanol amines, e.g. triethanol amine; N,N-dialkyl alkanol amines, e.g. N,N-dimethyl ethanol amine. Examples of suitable quaternary amines, or quaternary ammonium compounds, i.e. amines having four organic substituents, include tetraalkanol amines, e.g. tetraethanol ammonium hydroxide and tetraethanol ammonium chloride; quaternary amines or ammonium compounds with both alkanol and alkyl substituents such as N-alkyltrialkanol amines, e.g. methyltriethanol ammonium hydroxide and methyltriethanol ammonium chloride; N,N-dialkyldialkanol amines, e.g. dimethyl diethanol ammonium hydroxide and dimethyl diethanol ammonium chloride; N,N,N-trialkyl alkanol amines, e.g. choline hydroxide and choline chloride; N,N,N-trialkyl benzyl amines, e.g. dimethyl cocobenzyl ammonium hydroxide, dimethyl cocobenzyl ammonium chloride and trimethyl benzyl ammonium hydroxide; tetraalkyl ammonium salts, e.g. tetramethyl ammonium hydroxide, tetramethyl ammonium chloride, tetraethyl ammonium hydroxide, tetraethyl ammonium chloride, tetrapropyl ammonium hydroxide, tetrapropyl ammonium chloride, diethyldimethyl ammonium hydroxide, diethyldimethyl ammonium chloride, triethylmethyl ammonium hydroxide and triethylmethyl ammonium chloride. Examples of suitable diamines include aminoalkylalkanol amines, e.g. aminoethylethanol amine, piperazine and nitrogen-substituted piperazines having one or two lower alkyl groups of 1 to 4 carbon atoms. Examples of preferred organic nitrogen-containing compounds include triethanol amine, diethanol - amine, dipropyl amine, aminoethyl ethanol amine, 2-methoxyethyl amine, N,N-dimethylethanol amine, choline hydroxide, choline chloride, tetramethyl ammonium hydroxide, tetraethyl ammonium hydroxide and tetraethanol ammonium hydroxide.

Preferably, aqueous alkali metal silicate is added, either singly or in combination with aqueous sodium aluminate or aqueous organic nitrogen-containing compound.

When using two or more materials comprising at least one alkaline material and at least one second material, the materials can be added in any order, preferably the alkaline material is added first followed by adding the second material.

In a preferred embodiment, alkali metal silicate, e.g. sodium silicate, is added first and then an alkaline aluminium salt, e.g. aqueous sodium aluminate, is added. In another preferred embodiment, aqueous alkali metal hydroxide, e.g. sodium hydroxide, is added first and then an alkaline aluminium salt, e.g. aqueous sodium aluminate, is added. The addition of aluminium compound provides an aluminated silica-based sol. Suitably, the addition of aluminium compound results in aluminium modification of the silica-based particles, preferably the particles are surface-modified by aluminium. The amount of aluminium compound used can be varied within wide limits. Usually the amount of aluminium compound added corresponds to a mole ratio of Si:Al of from 10:1 to 100:1, suitably from 20:1 to 50:1, preferably from 25:1 to 35:1, and most preferably from 25:1 to 30:1.

In another preferred embodiment, alkali metal silicate, e.g. sodium silicate, is added first and then an organic nitrogen-containing compound, e.g. aqueous choline hydroxide, is added. In another preferred embodiment, aqueous alkali metal hydroxide, e.g. sodium hydroxide, is added first and then an organic nitrogen-containing compound, e.g. aqueous choline hydroxide, is added. The addition of organic nitrogen-containing compound provides a nitrogen-modified silica-based sol. The amount of organic nitrogen-containing compound used can be varied within wide limits. Usually the amount of organic nitrogen-containing compound added corresponds to a mole ratio of Si:N of from 2:1 to 100:1, suitably from 3:1 to 60:1 and preferably from 4:1 to 40:1.

In step (d) of the process, when using an aqueous alkali metal silicate to adjust the pH of the aqueous phase, the weight ratio of alkali metal silicate used is step (b) to alkali metal silicate used is step (d) can vary within wide limits; usually the ratio is in the range 99:1 to 1:9, suitably from 19:1 to 1:2, preferably from 4:1 to 1:1.

In step (e) of the process, the ion exchange resin is separated from the aqueous phase, for example by filtration. This can be done after step (c), for example after step (c) but before step (d), or after step (d). It is also possible to separate the ion exchange resin from the aqueous phase during step (d). For example, the ion exchange resin can be separated after adding an alkaline material but before adding a second material. It is also possible to add part of one alkaline material, e.g. aqueous alkali metal silicate, then separating the ion exchange resin from the aqueous phase followed by adding the remaining part of the alkaline material. Preferably, the ion exchange resin is separated from the aqueous phase after step (d).

The concentration of the aqueous starting materials used in the process, e.g. the aqueous alkali metal silicate, aqueous alkali metal hydroxide and aqueous sodium aluminate, is preferably adjusted so as to provide a silica-based sol which usually has a SiO₂ content of at least 3 % by weight, suitably at least 5 %, preferably at least 6 %, most preferably at least 7.5 %, and suitably up to 20 % by weight preferably up to 15 % by weight.

The aqueous silica-based sol according to the invention contains silica-based particles, i.e. particles based on silica or SiO₂, that are preferably anionic and colloidal, i.e., in the colloidal range of particle size. The particles can be and are suitably modified with aluminium, preferably surface modified with aluminium. The silica-based sol of the invention can have a mole ratio of Si:Al of from 10:1 to 100:1, suitably from 20:1 to 50:1, preferably from 25:1 to 35:1, and most preferably from 25:1 to 30:1.

The silica-based sol according to the invention can be modified with an organic nitrogen-containing compound. The silica-based sol of the invention can have a mole ratio of Si:N of from 2:1 to 100:1, suitably from 3:1 to 60:1 and preferably from 4:1 to 40:1.

The silica-based sol of the invention has an S value in the range of from 10 to 50 %, suitably from to 12 to 40 %, preferably from 15 to 25 %, and most preferably from 17 to 24 %. The S-value is measured and calculated as described by iler & Dalton in J. Phys. Chem. 60(1956), 955-957. The S-value indicates the degree of aggregate or microgel formation and a lower S-value is indicative of a higher degree of aggregation.

The silica-based particles present in the sol can have a specific surface area of at least 300 m²/g, suitably at least 700 m²/g, preferably at least 750 m²/g. The specific surface area is usually up to 1,000 m²/g, suitably up to 950 m²/g. The specific surface area is measured by means of titration with NaOH as described by Sears in Anatytical Chemistry 28(1956):12, 1981-1983, after appropriate removal of or adjustment for any compounds present in the sample that may disturb the titration like aluminium, nitrogen and boron compounds, for example as described by Sears and in U.S. Patent No. 5,176,891.

The silica-based sol of the invention usually has a mole ratio of Si:X, where X = alkali metal, of at least 3:1, suitably at least 4:1, preferably at least 5:1 and most preferably at least 6:1. The mole ratio of Si:X, where X = alkali metal, is usually up to 50:1, suitably up to 20:1, preferably up to 17:1, more preferably up to 15:1 and most preferably up to 10:1.

The silica-based sol of this invention is preferably stable. Suitably, the sol maintains a specific surface area of at least 300 m²/g, preferably at least 700 m²/g, for at least 3 months on storage or ageing at 20 °C in dark and non-agitated conditions. Suitably, the sol maintains an S value in the range of from 10 to 50 %, preferably from 12 to 40 %, for at least 3 months on storage or ageing at 20 °C in dark and non-agitated conditions.

The silica-based sol according to this invention is suitable for use as a flocculating agent, for example in the production of pulp and paper, notably as a drainage and retention aid, and within the field of water purification, both for purification of different kinds of waste water and for purification specifically of white water from the pulp and paper industry. The silica-based sols can be used as a flocculating agent, notably as a drainage and retention aid, in combination with organic polymers which can be selected from anionic, amphoteric, non-ionic and cationic polymers and mixtures thereof. The use of such polymers as flocculating agents and as drainage and retention aids is well known in the art. The polymers can be derived from natural or synthetic sources, and they can be linear, branched or cross-linked. Examples of generally suitable main polymers include anionic, amphoteric and cationic starches; anionic, amphoteric and cationic acrylamide-based polymers, including essentially linear, branched and cross-linked anionic and cationic acrylamide-based polymers; as well as cationic poly(diallyldimethyl ammonium chloride); cationic polyethylene imines; cationic polyamines; cationic polyamideamines and vinylamide-based polymers, melamine-formaldehyde and urea-formaldehyde resins. Suitably, the silica-based sols are used in combination with at least one cationic or amphoteric polymer, preferably cationic polymer. Cationic starch and cationic polyacrylamide are particularly preferred polymers and they can be used singly, together with each other or together with other polymers, e.g. other cationic and/or anionic polymers. The molecular weight of the polymer is suitably above 1,000,000 and preferably above 2,000,000. The upper limit is not critical; it can be about 50,000,000, usually 30,000,000 and suitably about 25,000,000. However, the molecular weight of polymers derived from natural sources may be higher.

The present silica-based sol can also be used in combination with cationic coagulant(s), either with or without the co-use of the organic polymer(s) described above. Examples of suitable cationic coagulants include water-soluble organic polymeric coagulants and inorganic coagulants. The cationic coagulants can be used singly or together, i.e. a polymeric coagulant can be used in combination with an inorganic coagulant.

Examples of suitable water-soluble organic polymeric cationic coagulants include cationic polyamines, polyamideamines, polyethylene imines, dicyandiamide condensation polymers and polymers of water soluble ethylenically unsaturated monomer or monomer blend which is formed of 50 to 100 mole % cationic monomer and 0 to 50 mole % other monomer. The amount of cationic monomer is usually at least 80 mole %, suitably 100 %. Examples of suitable ethylenically unsaturated cationic monomers include dialkylaminoalkyl (meth)-acrylates and -acrylamides, preferably in quaternised form, and diallyl dialkyl ammonium chlorides, e.g. diallyl dimethyl ammonium chloride (DADMAC), preferably homopolymers and copolymers of DADMAC. The organic polymeric cationic coagulants usually have a molecular weight in the range of from 1,000 to 700,000, suitably from 10,000 to 500,000. Examples of suitable inorganic coagulants include aluminium compounds, e.g. alum and polyaluminium compounds, e.g. polyaluminium chlorides, polyaluminium sulphates, polyaluminium silicate sulphates and mixtures thereof.

The components of the drainage and retention aids according to the invention can be added to the stock in conventional manner and in any order. When using drainage and retention aids comprising a silica-based sol and organic polymer, it is preferred to add the organic polymer to the stock before adding the silica-based sol, even if the opposite order of addition may be used. It is further preferred to add the organic polymer before a shear stage, which can be selected from pumping, mixing, cleaning, etc., and to add the silica-based sol after that shear stage. When using a cationic coagulant, it is preferably added to the cellulosic suspension before the addition of the silica-based sol, preferably also before the addition of the organic polymer(s).

The components of the drainage and retention aids according to the invention are added to the stock to be dewatered in amounts which can vary within wide limits depending on, inter alia, type and number of components, type of furnish, filler content, type of filler, point of addition, etc. Generally the components are added in amounts that give better drainage and retention than is obtained when not adding the components. The silica-based sol is usually added in an amount of at least 0.001% by weight, often at least 0.005% by weight, calculated as SiO₂ and based on dry furnish, i.e. dry cellulosic fibres and optional fillers, and the upper limit is usually 1.0% and suitably 0.5% by weight. The organic polymer is usually added in an amount of at least 0.001%, often at least 0.005% by weight, based on dry furnish, and the upper limit is usually 3% and suitably 1.5% by weight. When using a cationic polymeric coagulant, it can be added in an amount of at least 0.05%, based on dry furnish. Suitably, the amount is in the range of from 0.07 to 0.5%, preferably in the range from 0.1 to 0.35%. When using an aluminium compound as the inorganic coagulant, the total amount added is usually at least 0.05%, calculated as Al₂O₃ and based on dry furnish. Suitably the amount is in the range of from 0.1 to 3.0%, preferably in the range from 0.5 to 2.0%.

Further additives which are conventional in papermaking can of course be used in combination with the additives according to the invention, such as, for example, dry strength agents, wet strength agents, optical brightening agents, dyes, sizing agents like rosin-based sizing agents and cellulose-reactive sizing agents, e.g. alkyl and alkenyl ketene dimers and ketene multimers, alkyl and alkenyl succinic anhydrides, etc. The cellulosic suspension, or stock, can also contain mineral fillers of conventional types such as, for example, kaolin, china clay, titanium dioxide, gypsum, talc and natural and synthetic calcium carbonates such as chalk, ground marble and precipitated calcium carbonate.

The process of this invention is used for the production of paper. The term "paper", as used herein, of course include not only paper and the production thereof, but also other cellulosic sheet or web-like products, such as for example board and paperboard, and the production thereof. The process can be used in the production of paper from different types of suspensions of cellulose-containing fibres and the suspensions should suitably contain at least 25% by weight and preferably at least 50% by weight of such fibres, based on dry substance. The suspension can be based on fibres from chemical pulp such as sulphate, sulphite and organosolv pulps, mechanical pulp such as thermomechanical pulp, chemothermomechanical pulp, refiner pulp and groundwood pulp, from both hardwood and softwood, and can also be based on recycled fibres, optionally from de-inked pulps, and mixtures thereof. The pH of the suspension, the stock, can be within the range of from about 3 to about 10. The pH is suitably above 3.5 and preferably within the range of from 4 to 9.

The invention is further illustrated in the following example which, however, is not intended to limit the same. Parts and % relate to parts by weight and % by weight, respectively, unless otherwise stated.

### Examples

The following equipment and starting materials were used throughout the Examples:
(a) Reactor equipped with a stirrer;
(b) Ion exchange resin Amberlite® IRC84SP (available from Rohm & Haas) which was regenerated with sulphuric acid according to manufacturer's instruction;
(c) Aqueous sodium silicate solution having a SiO₂ content of about 21 wt. % and mole ratio of SiO₂ to Na₂0 of 3.32;
(d) Aqueous sodium aluminate solution containing 2.44 wt. % Al₂O₃;
(e) Aqueous choline hydroxide solution having a choline hydroxide content of 35 wt. %; and
(f) Aqueous sodium hydroxide solution having a concentration of 5 moles per kilo.

### Example 1

This example illustrates the preparation of a silica-based sol according to the invention: Regenerated ion exchange resin (471 g) and water (1,252 g) were charged into a reactor. The obtained slurry was stirred vividly and heated to a temperature of 30 °C. Aqueous sodium silicate (298 g) was then added to the slurry at a rate of 5 g/min. After the addition of sodium silicate, the pH of the slurry was about 7.3. The slurry was then stirred for another 44 minutes, whereupon the pH of the aqueous phase was 6.9. Thereafter additional aqueous sodium silicate (487 g) was added to the slurry at a rate of 5 g/min. The obtained silica-based sol was separated from the ion exchange resin.

The obtained silica-based sol had the following properties: SiO₂ content = 8.6 wt. %; mole ratio Si:Na = 11.0; pH = 10.4; specific surface area = 680 m²/g; and S-value = 20 %.

### Example 2

This example illustrates the preparation of another silica-based sol according to the invention: Aqueous sodium aluminate (52 g) was added to the sol (527.4 g) according to Example 1 under vigorous stirring during a period of 10 min.

The obtained silica-based sol had the following properties: SiO₂ content = 7.7 wt. %; mole ratio Si:Na = 7.5; mole ratio Si:Al = 26.2; pH = 10.7; specific surface area = 790 m²/g; and S-value = 18 %.

### Example 3

This example illustrates the preparation of yet another silica-based sol according to the invention: Aqueous choline hydroxide (7.9 g) was added to the sol (395 g) according to Example 1 under vigorous stirring at a rate of 4 g/min.

The obtained silica-based sol had the following properties: SiO₂ content = 8.4 wt. %; mole ratio Si:Na = 11.1; mole ration Si:N = 24.6; pH = 10.8; specific surface area = 890 m²/g; and S-value = 18 %.

### Example 4

This example illustrates the preparation of still another silica-based sol according to the invention: Regenerated ion exchange resin (600 g) and water (1,600 g) were charged into a reactor. The obtained slurry was stirred vividly and heated to a temperature of 30 °C. Aqueous sodium silicate (764 g) was then added to the slurry at a rate of 6.8 g/min. After the addition of sodium silicate, the pH of the slurry was about 8, whereupon the ion exchange resin was separated from the aqueous phase. Aqueous sodium hydroxide (30 g) was added to the aqueous phase at the rate of 10 g/min.

The obtained silica-based sol had the following properties: SiO₂ content = 6.7 wt. %; mole ratio Si:Na = 8.9; pH = 10.6; specific surface area = 810 m²/g; and S-value = 25 %.

### Example 5

This example illustrates the preparation of another silica-based sol according to the invention: Aqueous sodium aluminate (83 g) was added to the sol (776 g) according to Example 4 under vigorous stirring during a period of 10 min.

The obtained silica-based sol had the following properties: SiO₂ content = 6.1 wt. %; mole ratio Si:Na = 5.9; mole ratio Si:Al = 20.3; pH = 10.9; specific surface area = 930 m²/g; and S-value = 22 %.

### Example 6

This example illustrates the preparation of yet another silica-based sol according to the invention: Aqueous choline hydroxide (14.3 g) was added to the sol (714 g) according to Example 4 under vigorous stirring at a rate of 4 g/min.

The obtained silica-based sol had the following properties: SiO₂ content = 6.6 wt. %; mole ratio Si:Na = 9.0; mole ration Si:N = 18.9; pH = 11; specific surface area = 1,010 m²/g; and S-value = 23 %.

### Example 7

This example illustrates the preparation of yet another silica-based sol according to the invention: Regenerated ion exchange resin (595 g) and water (1,605 g) were charged into a reactor. The obtained slurry was stirred vividly and heated to a temperature of 30 °C. Aqueous sodium silicate (849 g) was then added to the slurry at a rate of 6.3 g/min. The slurry was then stirred for another 135 minutes, whereupon the pH of the aqueous phase was 7.9. Thereafter additional aqueous sodium silicate (326 g) was added to the slurry at a rate of 6.3 g/min. The obtained silica-based sol was separated from the ion exchange resin.

The obtained silica-based sol had the following properties: SiO₂ content = 9.3 wt. %; mole ratio Si:Na = 7.5; pH = 10.4; specific surface area = 850 m²/g; and S-value = 23 %.

### Example 8

The following silica-based sols, Ref. 1 a to Ref. 3, were prepared for comparison purposes:
Ref. 1a is a silica-based sol prepared according to the disclosure of Example 4 of U.S. Patent Nos. 6,372,089 and 6,372,806.
Ref. 1b is a silica-based sol prepared according to the general disclosure of column 4 of U.S. Patent Nos. 6,372,089 and 6,372,806, wherein in step (c) the contents of the reaction vessel was stirred until the pH of the contents of the vessel was 9.2
Ref. 1c is a silica-based sol prepared according to the disclosure of U.S. Patent No. 5,447,604 which had an S-value of about 25 %, a mole ratio of Si:Al of about 19 and contained silica particles with a specific surface area of about 900 m²/g SiO₂.
Ref. 1d is a silica-based sol prepared according to the disclosure of U.S. Patent No. 5,603,805 with an S-value of 34 % and contained silica particles with a specific surface area of about 700 m²/g.
Ref. 2a is a silica-based sol prepared according to the disclosure of U.S. Patent No. 5,368,833 which had an S-value of about 25 %, a mole ratio of Si:Al of about 19 and contained silica particles with a specific surface area of about 900 m²/g SiO₂ which were surface-modified with aluminium.
Ref. 2b is a silica-based sol prepared according to the disclosure of U.S. Patent No. 5,368,833 which had an S-value of 20 %, a mole ratio of Si:Al of about 18 and contained silica particles with a specific surface area of about 820 m²/g SiO₂ which were surface-modified with aluminium.
Ref. 3 is a silica-based sol prepared according to the disclosure of U.S. Patent No. 6,379,500 which had an S-value of about 30 %, mole ratio of Si:Na of about 10, mole ratio of Si:N of about 21, and contained choline hydroxide and silica particles with a specific surface area of about 900 m²/g SiO₂.

### Example 9

In the following tests, drainage performance of the silica-based sols according to Examples 1 to 3 ("Ex. 1", "Ex. 2" and "Ex. 3", respectively) were tested against the drainage performance of silica-based sols according to Example 8. The drainage performance was evaluated by means of a Dynamic Drainage Analyser (DDA), available from Akribi, Sweden, which measures the time for draining a set volume of stock through a wire when removing a plug and applying a vacuum to that side of the wire opposite to the side on which the stock is present.

The stock used was based on a standard fine paper furnish consisting of 60 % bleached birch sulfate and 40 % bleached pine sulfate. 30 % ground calcium carbonate was added to the stock as filler and 0.3 g/l of Na₂SO₄·10 H₂O was added to increase conductivity. Stock pH was 8.1, conductivity 1.5 mS/cm and consistency 0.5 %. In the tests, the silica-based sols were tested in conjunction with a cationic polymer being cationic starch having a degree of substitution of about 0.042. The starch was added in an amount of 8 kg/tonne, calculated as dry starch on dry furnish.

The stock was stirred in a baffled jar at a speed of 1,500 rpm throughout the test and chemical additions to the stock were made as follows:
i) adding cationic starch followed by stirring for 30 seconds;
ii) adding silica-based sol followed by stirring for 15 seconds; and
iii) draining the stock while automatically recording the drainage time.

Tables 1 to 3 show the results obtained when using varying dosages of silica-based sol, kg/tonne, calculated as SiO₂ and based on dry furnish.

**Table 1**

| **Test No.** | **Cationic Starch Dosage** | **Silica Dosage** | **Dewatering Time [s]** | | |
|---|---|---|---|---|---|
| | **[kg/t]** | **[kg/t]** | **Ex. 1** | **Ref. 1a** | **Ref. 1c** |
| 1 | 8 | 0 | 19.4 | 19.4 | 19.4 |
| 2 | 8 | 1.0 | 13.4 | 14.7 | 14.9 |
| 3 | 8 | 1.5 | 12.4 | 13.7 | 13.9 |
| 4 | 8 | 2.0 | 10.8 | 13.1 | 13.3 |

**Table 2**

| **Test No.** | **Cationic Starch Dosage** | **Silica Dosage** | **Dewatering Time [s]** | | |
|---|---|---|---|---|---|
| | **[kg/t]** | **[kg/t]** | **Ex.2** | **Ref. 1a** | **Ref. 2a** |
| 1 | 8 | 0 | 19.4 | 19.4 | 19.4 |
| 2 | 8 | 1.0 | 13.8 | 14.7 | 14.1 |
| 3 | 8 | 1.5 | 12.2 | 13.7 | 13.7 |
| 4 | 8 | 2.0 | 11.1 | 13.1 | 12.6 |

**Table 3**

| **Test No.** | **Cationic Starch Dosage** | **Silica Dosage** | **Dewatering Time [s]** | | |
|---|---|---|---|---|---|
| | **[kg/t]** | **[kg/t]** | **Ex. 3** | **Ref. 1a** | **Ref. 3a** |
| 1 | 8 | 0 | 19.4 | 19.4 | 19.4 |
| 2 | 8 | 1.0 | 12.6 | 14.7 | 11.4 |
| 3 | 8 | 1.5 | 10.0 | 13.7 | 10.5 |
| 4 | 8 | 2.0 | 9.2 | 13.1 | 10.9 |

### Example 10

The silica-based sols according to Examples 1 to 3 were further evaluated following the procedure of Example 9 except that a cationic polyacrylamide ("PAM") was used instead of cationic starch. In addition, the stock was stirred in a baffled jar at a speed of 1,500 rpm throughout the test and chemical additions to the stock were made as follows:
i) adding cationic polyacrylamide followed by stirring for 20 seconds;
ii) adding silica-based sol followed by stirring for 10 seconds; and
iii) draining the stock while automatically recording the drainage time.

Tables 4 to 6 show the results obtained when using different dosages of cationic polyacrylamide, kg/tonne, calculated as dry starch on dry furnish, and silica-based sol, kg/tonne, calculated as SiO₂ and based on dry furnish.

**Table 4**

| **Test No.** | **Cationic PAM Dosage** | **Silica Dosage** | **Dewatering Time [s]** | | |
|---|---|---|---|---|---|
| | **[kg/t]** | **[kg/t]** | **Ex.1** | **Ref. 1a** | **Ref. 1c** |
| 1 | 0.8 | 0 | 17.2 | 17.2 | 17.2 |
| 2 | 0.8 | 0.25 | 10.4 | 11.1 | 11.5 |
| 3 | 0.8 | 0.50 | 7.8 | 8.2 | 9.0 |
| 4 | 0.8 | 0.75 | 6.9 | 7.1 | 7.5 |

**Table 5**

| **Test No.** | **Cationic PAM Dosage** | **Silica Dosage** | **Dewatering Time [s]** | | |
|---|---|---|---|---|---|
| | **[kg/t]** | **[kg/t]** | **Ex. 2** | **Ref. 1a** | **Ref. 2a** |
| 1 | 0.8 | 0 | 17.2 | 17.2 | 17.2 |
| 2 | 0.8 | 1.0 | 9.8 | 11.1 | 10.0 |
| 3 | 0.8 | 1.5 | 7.2 | 8.2 | 7.7 |
| 4 | 0.8 | 2.0 | 6.6 | 7.1 | 7.4 |

**Table 6**

| **Test No.** | **Cationic PAM Dosage** | **Silica Dosage** | **Dewatering Time [s]** | | |
|---|---|---|---|---|---|
| | **[kg/t]** | **[kg/t]** | **Ex. 3** | **Ref. 1a** | **Ref. 3a** |
| 1 | 0.8 | 0 | 17.2 | 17.2 | 17.2 |
| 2 | 0.8 | 1.0 | 9.9 | 11.1 | 11.2 |
| 3 | 0.8 | 1.5 | 7.5 | 8.2 | 9.6 |
| 4 | 0.8 | 2.0 | 6.8 | 7.1 | 10.1 |

### Example 11

The silica-based sols according to Examples 4 to 6 were tested against silica-based sols according to Example 8 following the procedure of Example 9.

Tables 7 to 9 show the results obtained when using varying dosages of silica-based sol, kg/tonne, calculated as SiO₂ and based on dry furnish.

**Table 7**

| **Test No.** | **Cationic Starch Dosage** | **Silica Dosage** | **Dewatering Time [s]** | | |
|---|---|---|---|---|---|
| | **[kg/t]** | **[kg/t]** | **Ex. 4** | **Ref. 1a** | **Ref. 1d** |
| 1 | 8 | 0 | 20.6 | 20.6 | 20.6 |
| 2 | 8 | 1.0 | 14.6 | 15.5 | 15.1 |
| 3 | 8 | 1.5 | 13.3 | 14.1 | 14.4 |
| 4 | 8 | 2.0 | 12.4 | 13.6 | 13.4 |

**Table 8**

| **Test No.** | **Cationic Starch Dosage** | **Silica Dosage** | **Dewatering Time [s]** | | |
|---|---|---|---|---|---|
| | **[kg/t]** | **[kg/t]** | **Ex. 5** | **Ref. 1a** | **Ref. 2a** |
| 1 | 8 | 0 | 20.6 | 20.6 | 20.6 |
| 2 | 8 | 1.0 | 13.9 | 15.5 | 14.7 |
| 3 | 8 | 1.5 | 12.8 | 14.1 | 13.6 |
| 4 | 8 | 2.0 | 12.5 | 13.6 | 13.5 |

**Table 9**

| **Test No.** | **Cationic Starch Dosage** | **Silica Dosage** | **Dewatering Time [s]** | | |
|---|---|---|---|---|---|
| | **[kg/t]** | **[kg/t]** | **Ex. 6** | **Ref. 1a** | **Ref. 3** |
| 1 | 8 | 0 | 20.6 | 20.6 | 20.6 |
| 2 | 8 | 1.0 | 11.3 | 15.5 | 10.5 |
| 3 | 8 | 1.5 | 9.6 | 14.1 | 10.0 |
| 4 | 8 | 2.0 | 9.1 | 13.6 | 10.0 |

### Example 12

The silica-based sols according to Examples 4 to 6 were tested against silica-based sols according to Example 8 following the procedure of Example 10.

Tables 10 to 12 show the results obtained when using varying dosages of silica-based sol, kg/tonne, calculated as SiO₂ and based on dry furnish.

**Table 10**

| **Test No.** | **Cationic PAM Dosage** | **Silica Dosage** | **Dewatering Time [s]** | | |
|---|---|---|---|---|---|
| | **[kg/t]** | **[kg/t]** | **Ex. 4** | **Ref. 1b** | **Ref. 1c** |
| 1 | 0.8 | 0 | 16.0 | 16.0 | 16.0 |
| 2 | 0.8 | 0.25 | 9.5 | 10.8 | 10.7 |
| 3 | 0.8 | 0.50 | 6.9 | 8.1 | 8.0 |
| 4 | 0.8 | 0.75 | 6.0 | 7.8 | 7.1 |

**Table 11**

| **Test No.** | **Cationic PAM Dosage** | **Silica Dosage** | **Dewatering Time [s]** | | |
|---|---|---|---|---|---|
| | **[kg/t]** | **[kg/t]** | **Ex. 5** | **Ref. 2a** | **Ref. 2b** |
| 1 | 0.8 | 0 | 16.0 | 16.0 | 16.0 |
| 2 | 0.8 | 0.25 | 8.6 | 9.1 | 8.7 |
| 3 | 0.8 | 0.50 | 6.6 | 7.9 | 7.4 |
| 4 | 0.8 | 0.75 | 6.0 | 7.6 | 7.2 |

**Table 12**

| **Test No.** | **Cationic PAM Dosage** | **Silica Dosage** | **Dewatering Time [s]** | |
|---|---|---|---|---|
| | **[kg/t]** | **[kg/t]** | **Ex. 6** | **Ref. 3** |
| 1 | 0.8 | 0 | 16.0 | 16.0 |
| 2 | 0.8 | 0.25 | 9.2 | 10.5 |
| 3 | 0.8 | 0.50 | 7.1 | 9.0 |
| 4 | 0.8 | 0.75 | 6.9 | 10.2 |

### Example 13

The silica-based sol according to Example 7 was tested against a silica-based sol according to Example 8 following the procedure of Example 9.

Table 13 shows the results obtained when using varying dosages of silica-based sol, kg/tonne, calculated as SiO₂ and based on dry furnish.

**Table 13**

| **Test No.** | **Cationic Starch Dosage** | **Silica Dosage** | **Dewatering Time [s]** | | |
|---|---|---|---|---|---|
| | **[kg/t]** | **[kg/t]** | **Ex. 7** | **Ref. 1b** | **Ref. 1c** |
| 1 | 8 | 0 | 27.1 | 27.1 | 27.1 |
| 2 | 8 | 1.0 | 16.6 | 18.3 | 18.5 |
| 3 | 8 | 1.5 | 14.8 | 17.2 | 16.7 |
| 4 | 8 | 2.0 | 13.3 | 15.8 | 16.1 |

## Claims

1. A process for producing an aqueous silica-based sol having an S-value in the range of from 10 to 50 % which comprises:
(a) providing a cationic ion exchange resin having at least part of its ion exchange capacity in hydrogen form;
(b) bringing said ion exchange resin in contact with an aqueous alkali metal silicate solution to form an aqueous slurry;
(c) stirring said aqueous slurry until the pH of the aqueous phase is in the range of from 5.0 to 8.0 and to allow particle aggregation and microgel formation;
(d) adjusting the pH of said aqueous phase to above 9.0 by adding at least one alkaline material selected from aqueous alkali metal silicates, aqueous alkali metal hydroxides and ammonium hydroxide; and
(e) separating said ion exchange resin from the aqueous phase after step (c) or after step (d).

2. The process according to claim 1, wherein the silica-based sol obtained has an S-value in the range of from 12 to 40 %.

3. The process according to claim 1 or 2, wherein in step (c) the aqueous slurry is stirred until the pH of the aqueous phase is in the range of from 6.5 to 7.5.

4. The process according to any one of the preceding claims, wherein in step (c) the slurry is stirred to allow particle aggregation or microgel formation corresponding to an S-value in the range of from 4 to 45 %.

5. The process according to any one of the preceding claims, wherein in step (c) the slurry is stirred to allow particle aggregation or microgel formation corresponding to an S-value in the range of from 10 to 25 %.

6. The process according to any one of the preceding claims, wherein the ion exchange resin is separated from the aqueous phase after step (c) but before step (d).

7. The process according to any of one claims 1-5, wherein the ion exchange resin is separated from the aqueous phase after step (d).

8. The process according to any one of the preceding claims, wherein in step (d) the pH of the aqueous phase is adjusted to be in the range of from about 9.5 to about 11.2.

9. The process according to any one of the preceding claims, wherein step (d) comprises adding aqueous alkali metal silicate.

10. The process according to any one of the preceding claims, wherein step (d) comprises adding aqueous alkali metal hydroxide.

11. The process according to any one of the preceding claims, wherein step (d) comprises adding an organic nitrogen-containing compound.

12. The process according to any one of the preceding claims, wherein step (d) comprises adding choline hydroxide.

13. The process according to any one of the preceding claims, wherein in step (b) the pH of the aqueous alkali metal silicate solution is above 11.

14. The process according to any one of the preceding claims, wherein in step (b) the pH of the aqueous alkali metal silicate solution is above 12.

15. The process according to any one of the preceding claims, wherein the silica-based sol obtained contains silica-based particles having a specific surface area from 700 to 950 m²/g.

16. The process according to any one of the preceding claims, wherein in step (c) the stirring takes place during a period of time of from 5 to 240 minutes.

## Patentansprüche

1. Verfahren zur Herstellung einer wässrigen Sole auf der Basis von Siliciumdioxid mit einem S-Wert in dem Bereich von 10 bis 50%, das Folgendes umfasst:
(a) Bereitstellen eines kationischen Ionenaustauschharzes, dessen Ionenaustauschkapazität mindestens teilweise in Wasserstoffform vorliegt;
(b) Inkontaktbringen des Ionenaustauschharzes mit einer wässrigen Alkalimetallsilikatlösung, um einen wässrigen Brei zu bilden;
(c) Umrühren des wässrigen Breis, bis der pH-Wert der wässrigen Phase in dem Bereich von 5,0 bis 8,0 liegt, und um eine Partikelaggregation und Mikrogelbildung zu erlauben;
(d) Einstellen des pH-Wertes der wässrigen Phase auf über 9,0 durch Hinzufügen mindestens eines alkalischen Stoffes, ausgewählt aus wässrigen Alkalimetallsilikaten, wässrigen Alkalimetallhydroxiden und Ammoniumhydroxid; und
(e) Trennen des Ionenaustauschharzes von der wässrigen Phase nach Schritt (c) oder nach Schritt (d).

2. Verfahren nach Anspruch 1, wobei die gewonnene Sole auf der Basis von Siliciumdioxid einen S-Wert in dem Bereich von 12 bis 40% hat.

3. Verfahren nach Anspruch 1 oder 2, wobei der wässrige Brei in Schritt (c) umgerührt wird, bis der pH-Wert der wässrigen Phase in dem Bereich von 6,5 bis 7,5 liegt.

4. Verfahren nach einem der vorhergehenden Ansprüche, wobei der Brei in Schritt (c) umgerührt wird, um eine Partikelaggregation oder Mikrogelbildung entsprechend einem S-Wert in dem Bereich von 4 bis 45% zu erlauben.

5. Verfahren nach einem der vorhergehenden Ansprüche, wobei der Brei in Schritt (c) umgerührt wird, um eine Partikelaggregation oder Mikrogelbildung entsprechend einem S-Wert in dem Bereich von 10 bis 25% zu erlauben.

6. Verfahren nach einem der vorhergehenden Ansprüche, wobei das lonenaustauschharz nach Schritt (c), aber vor Schritt (d), von der wässrigen Phase getrennt wird.

7. Verfahren nach einem der Ansprüche 1-5, wobei das lonenaustauschharz nach Schritt (d) von der wässrigen Phase getrennt wird.

8. Verfahren nach einem der vorhergehenden Ansprüche, wobei der pH-Wert der wässrigen Phase in Schritt (d) so eingestellt wird, dass er in dem Bereich von etwa 9,5 bis etwa 11,2 liegt.

9. Verfahren nach einem der vorhergehenden Ansprüche, wobei Schritt (d) das Hinzufügen des wässrigen Alkalimetallsilikats umfasst.

10. Verfahren nach einem der vorhergehenden Ansprüche, wobei Schritt (d) das Hinzufügen des wässrigen Alkalimetallhydroxids umfasst.

11. Verfahren nach einem der vorhergehenden Ansprüche, wobei Schritt (d) das Hinzufügen einer organischen stickstoffhaltigen Verbindung umfasst.

12. Verfahren nach einem der vorhergehenden Ansprüche, wobei Schritt (d) das Hinzufügen von Cholinhydroxid umfasst.

13. Verfahren nach einem der vorhergehenden Ansprüche, wobei der pH-Wert der wässrigen Alkalimetallsilikatlösung in Schritt (b) über 11 liegt.

14. Verfahren nach einem der vorhergehenden Ansprüche, wobei der pH-Wert der wässrigen Alkalimetallsilikatlösung in Schritt (b) über 12 liegt.

15. Verfahren nach einem der vorhergehenden Ansprüche, wobei die gewonnene Sole auf der Basis von Siliciumdioxid Silika-basierte Partikel mit einer spezifischen Oberfläche von 700 bis 950 m²/g enthält.

16. Verfahren nach einem der vorhergehenden Ansprüche, wobei das Umrühren in Schritt (c) während eines Zeitraums von 5 bis 240 Minuten stattfindet.

## Revendications

1. Procédé de production d'un sol aqueux à base de silice ayant une valeur S se trouvant dans la plage allant de 10 à 50% qui comprend le fait :
(a) de fournir une résine échangeuse d'ions cationique dont au moins une partie de la capacité d'échange d'ions se présente sous la forme d'hydrogène ;
(b) d'amener ladite résine échangeuse d'ions en contact avec une solution aqueuse de silicate de métal alcalin pour former une bouillie aqueuse ;
(c) d'agiter ladite bouillie aqueuse jusqu'à ce que le pH de la phase aqueuse se trouve dans la plage allant de 5,0 à 8,0 et afin de permettre l'agrégation des particules et la formation d'un microgel ;
(d) d'ajuster le pH de ladite phase aqueuse à plus de 9,0 en ajoutant au moins un matériau alcalin choisi parmi des silicates de métal alcalin aqueux, des hydroxydes de métal alcalin aqueux et l'hydroxyde d'ammonium ; et
(e) de séparer ladite résine échangeuse d'ions de la phase aqueuse après l'étape (c) ou après l'étape (d).

2. Procédé selon la revendication 1, dans lequel le sol à base de silice obtenu a une valeur S se trouvant dans la plage allant de 12 à 40%.

3. Procédé selon la revendication 1 ou 2, dans lequel, dans l'étape (c) la bouillie aqueuse est agitée jusqu'à ce que le pH de la phase aqueuse se trouve dans la plage allant de 6,5 à 7,5.

4. Procédé selon l'une quelconque des revendications précédentes, dans lequel, dans l'étape (c) la bouillie est agitée pour permettre l'agrégation des particules ou la formation d'un microgel correspondant à une valeur S se trouvant dans la plage allant de 4 à 45%.

5. Procédé selon l'une quelconque des revendications précédentes, dans lequel, dans l'étape (c) la bouillie est agitée pour permettre l'agrégation des particules ou la formation d'un microgel correspondant à une valeur S se trouvant dans la plage allant de 10 à 25%.

6. Procédé selon l'une quelconque des revendications précédentes, dans lequel la résine échangeuse d'ions est séparée de la phase aqueuse après l'étape (c) mais avant l'étape (d).

7. Procédé selon l'une quelconque des revendications 1 à 5, dans lequel la résine échangeuse d'ions est séparée de la phase aqueuse après l'étape (d).

8. Procédé selon l'une quelconque des revendications précédentes, dans lequel, dans l'étape (d) le pH de la phase aqueuse est ajusté de façon à se situer dans la plage allant d'environ 9,5 à 11,2.

9. Procédé selon l'une quelconque des revendications précédentes, dans lequel l'étape (d) comprend l'ajout du silicate de métal alcalin aqueux.

10. Procédé selon l'une quelconque des revendications précédentes, dans lequel l'étape (d) comprend l'ajout de l'hydroxyde de métal alcalin aqueux.

11. Procédé selon l'une quelconque des revendications précédentes, dans lequel l'étape (d) comprend l'ajout d'un composé organique contenant de l'azote.

12. Procédé selon l'une quelconque des revendications précédentes, dans lequel l'étape (d) comprend l'ajout de l'hydroxyde de choline.

13. Procédé selon l'une quelconque des revendications précédentes, dans lequel, dans l'étape (b) le pH de la solution aqueuse de silicate de métal alcalin est supérieur à 11.

14. Procédé selon l'une quelconque des revendications précédentes, dans lequel, dans l'étape (b) le pH de la solution aqueuse de silicate de métal alcalin est supérieur à 12.

15. Procédé selon l'une quelconque des revendications précédentes, dans lequel le sol à base de silice obtenu contient des particules à base de silice ayant une surface spécifique allant de 700 à 950 m²/g.

16. Procédé selon l'une quelconque des revendications précédentes, dans lequel, dans l'étape (c) l'agitation s'effectue pendant une période de 5 à 240 minutes.
